(19) Europäisches Patentamt / European Patent Office / Office européen des brevets

(11) **EP 2 921 567 B1**

(12) **EUROPEAN PATENT SPECIFICATION**

(45) Date of publication and mention
of the grant of the patent:
**03.10.2018 Bulletin 2018/40**

(51) Int Cl.:
*C22C 21/06* (2006.01)        *C22C 21/02* (2006.01)
*C22F 1/05* (2006.01)        *F17C 1/14* (2006.01)
*C22F 1/00* (2006.01)

(21) Application number: **13856013.1**

(22) Date of filing: **18.11.2013**

(86) International application number:
**PCT/JP2013/081047**

(87) International publication number:
**WO 2014/077391 (22.05.2014 Gazette 2014/21)**

(54) **ALUMINUM ALLOY MATERIAL FOR HIGH-PRESSURE HYDROGEN GAS CONTAINERS AND METHOD FOR PRODUCING SAME**

ALUMINIUMLEGIERUNG FÜR HOCHDRUCKWASSERSTOFF-GASBEHÄLTER UND VERFAHREN ZUR HERSTELLUNG DAVON

MATÉRIAU EN ALLIAGE D'ALUMINIUM POUR DES RÉCIPIENTS D'HYDROGÈNE GAZEUX HAUTE PRESSION ET PROCÉDÉ PERMETTANT DE PRODUIRE CE DERNIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.11.2012 JP 2012253739**

(43) Date of publication of application:
**23.09.2015 Bulletin 2015/39**

(73) Proprietors:
• **Kabushiki Kaisha Kobe Seiko Sho (Kobe Steel, Ltd.)**
**Kobe-shi, Hyogo 651-8585 (JP)**
• **UACJ Corporation**
**Tokyo 100-0004 (JP)**
• **Nippon Light Metal Company, Ltd.**
**Tokyo 140-8628 (JP)**

(72) Inventors:
• **NAKAI, Manabu**
**Tochigi 321-4367 (JP)**
• **YASUNAGA, Shigenobu**
**Takatsukadai 1-chome, Nishi-ku, Kobe-shi, Hyogo 651-2271 (JP)**

(74) Representative: **Müller-Boré & Partner Patentanwälte PartG mbB**
**Friedenheimer Brücke 21**
**80639 München (DE)**

(56) References cited:
**EP-A1- 0 687 743        EP-A1- 2 548 984**
**EP-A1- 2 811 042        WO-A1-2013/114928**
**JP-A- S63 161 136        JP-A- 2009 024 225**
**JP-A- 2011 214 149**

EP 2 921 567 B1

## Description

TECHNICAL FIELD

The present invention relates to an aluminum alloy material for a high-pressure hydrogen gas container and to a method for producing the same.

BACKGROUND ART

In recent years, hydrogen is attracting attention as a clean energy source for fuel cells. However, since hydrogen can cause embrittlement of metal materials such as iron and aluminum, it is generally difficult to efficiently store hydrogen gas under high pressure in high-pressure gas storage containers made of metal, such as gas cylinders, installed in automobiles and other vehicles.

This problem applies not only to high-pressure hydrogen gas containers made of iron but also to high-pressure hydrogen gas containers produced using an aluminum alloy liner for weight reduction. There has been a demand for materials that have high hydrogen embrittlement resistance so that they can form highly reliable high-pressure hydrogen gas containers.

High-pressure hydrogen gas storage composite containers have been developed, which have improved hydrogen embrittlement resistance. The high-pressure hydrogen gas storage composite containers are classified into the following: a structure (Type 4) composed of a reinforced plastic container and reinforced fibers wound thereon; and a structure (Type 3) composed of a metal liner such as an aluminum alloy or iron liner and fiber-reinforced resin or reinforced fibers deposited or wound on the outer surface of the liner. These containers have a mouthpiece to which a nozzle for charging and discharging gas is to be attached. In Type 4, generally, a metal mouthpiece member and the reinforced plastic container are integrated with reinforced fibers wound on them. In Type 3, an end part of the liner is drawn to form a mouthpiece portion, so that no separate mouthpiece member is necessary.

For example, as disclosed in Patent Document 1, materials used to form the mouthpiece member include an aluminum alloy (6061 alloy) and stainless steel. The pressure in high-pressure hydrogen gas containers for vehicles is increasing from 35 MPa to 70 MPa so that the mileage per one hydrogen charge can be increased. In some cases, a vehicle container is filled with hydrogen from a hydrogen station container using a difference in pressure between the two containers. In such cases, the pressure in the hydrogen station container can be much higher.

Patent Document 2 describes the structure of a high-pressure hydrogen gas container, having a tank main body provided with a metal mouthpiece part, in which a metal valve assembly or any other tank component having an integrally incorporated valve or other piping elements is attached to the opening of the mouthpiece part. The valve assembly is fixed by being screwed into the mouthpiece part. An increase in filling pressure can increase the stress on the screw head and may cause damage. Therefore, the use of a high-strength material is also highly effective in ensuring safety. In particular, the use of a high-strength aluminum alloy also seems to lead to a reduction in product weight.

Patent Document 3 discloses that a high-strength 6000 series aluminum alloy for a high-pressure hydrogen gas container member has the composition of AA6066 alloy and also has Mg and Si contents satisfying the following conditions: $Mg \leq 1.73Si - 0.52\%$, $Mg \leq 1.5\%$, $Mg \geq 0.9\%$, and $Si \leq 1.8\%$.

PRIOR ART DOCUMENTS

PATENT DOCUMENTS

Patent Document 1: JP 2001-349494 A Patent Document 2: JP 2008-2654 A Patent Document 3: JP 2009-24225 A

NON-PATENT DOCUMENTS

Non-Patent Document 1: "STRUCTURE AND PROPERTIES OF ALUMINUM", The Japan Institute of Light Metals, November 1991, pp. 483-484 Non-Patent Document 2: "ALUMINUM ALLOYS-CONTEMPORARY RESEARCH AND APPLICATIONS", Academic Press Inc., 1989, p. 13

SUMMARY OF THE INVENTION

PROBLEMS TO BE SOLVED BY THE INVENTION

On the other hand, concerning the environment in which high-pressure hydrogen gas containers for fuel cells are used, high-pressure hydrogen gas containers for stations and transportation are necessarily exposed to corrosive environments, and even vehicle high-pressure hydrogen gas containers can be exposed to corrosive environments. In addition, not only the outside but also the inside of high-pressure hydrogen gas containers can be a corrosive environment depending on the quality of the hydrogen contained or the handling method during the connection.

Therefore, high-pressure hydrogen gas containers are first required to have hydrogen embrittlement resistance. In addition, for long-term safe use, high-pressure hydrogen gas containers are also required to be made of a material having high performance on corrosion resistance such as grain boundary corrosion resistance or SCC resistance (stress corrosion cracking resistance).

These points should be considered, but Patent Document 3 discloses nothing about these points. In addition, Non-Patent Document 1 shows that AA6066 alloy has low corrosion resistance, and Non-Patent Document 2 shows that the alloy is not widely used in the world because of its low corrosion resistance.

The present invention has been accomplished in view of the above circumstances, and it is an object of the present invention to provide an aluminum alloy material that is for a high-pressure hydrogen gas storage container and has high hydrogen embrittlement resistance, high strength, and high corrosion resistance.

MEANS FOR SOLVING THE PROBLEMS

As a result of studies to achieve the object, the inventors have found that a yield strength and electrical conductivity of aluminum alloys have a certain correlation with corrosion resistance and that Al alloys satisfying specific formulae for yield strength and electrical conductivity have high corrosion resistance, specifically, high grain boundary corrosion resistance and high SCC resistance.

In addition, aluminum alloys having a specific composition close to AA6066 or AA6069 alloy also have high hydrogen embrittlement resistance and high strength. An aluminum alloy material satisfying the specific relationship between yield strength and electrical conductivity can be produced under specific production conditions using an aluminum alloy having such a specific composition. The inventors have accomplished the present invention based on these new findings which make it possible to solve the problems.

Specifically, an aluminum alloy material for a high-pressure hydrogen gas container comprises 0.6 to 1.5 mass% of Si, 0.6 to 1.6 mass% of Mg, 0.2 to 0.8 mass% of Cu, 0.05 to 0.4 mass% of Fe, Mn limited to 0.6 mass% or less, Cr limited to 0.3 mass% or less, Zr limited to 0.15 mass% or less, V limited to 0.2 mass% or less, Zn limited to 0.25 mass% or less, and Ti limited to 0.1 mass% or less, with the balance consisting in Al and inevitable impurities. The total content of Mn, Cr, Zr, and V is 0.05 mass% or more. The the aluminum alloy material has a yield strength S (MPa) and an electrical conductivity E (IACS%) satisfying:

$$\text{formula (1): } S \leq -10.46 \times E + 801;$$

; and

$$\text{formula (2): } S \geq -25 \times E + 1296.$$

The aluminum alloy material has a yield strength S of 270 MPa or more and an electrical conductivity of 36 IACS% or more.

With the above-mentioned features, containing Si, Mg, Cu, and Fe can achieve high corrosion resistance with maintaining strength and hydrogen embrittlement resistance. Further, regulated relationship between the yield strength and the electrical conductivity can achieve high performance on grain boundary corrosion resistance and SCC resistance

Further, a method for producing the aluminum alloy material for a high-pressure hydrogen gas container with above-mentioned composition, the method comprises in order, a melting-casting step comprising casting an aluminum alloy having the composition to form an ingot, a homogenizing heat treatment step comprising heat-treating the ingot at 475 to 575°C, a hot working step comprising performing hot working of hot rolling or hot forging at 275 to 575°C at a working ratio of 50% or more, a tempering treatment step comprising performing a solution treatment and performing a quenching treatment at a cooling rate of 1°C/second or more, and a thermal aging treatment step comprising performing a heat treatment at 160 to 240°C for 1 to 48 hours.

According to the manufacturing method comprising the above-mentioned steps, using the aluminum alloy material with the above-mentioned composition can manufacture an aluminum alloy for a high-pressure hydrogen gas container with high performance on hydrogen embrittlement resistance, strength, and corrosion resistance.

EFFECT OF THE INVENTION

The aluminum alloy material of the present invention for a high-pressure hydrogen gas container has high performance on all of tensile strength, hydrogen embrittlement resistance, grain boundary corrosion resistance, and SCC resistance. The method of the present invention for producing an aluminum alloy material for a high-pressure hydrogen gas container makes it possible to produce a high-pressure hydrogen gas container-forming aluminum alloy material having all of high tensile strength, high hydrogen embrittlement resistance, and high corrosion resistance.

BRIEF DESCRIPTION OF THE DRAWING

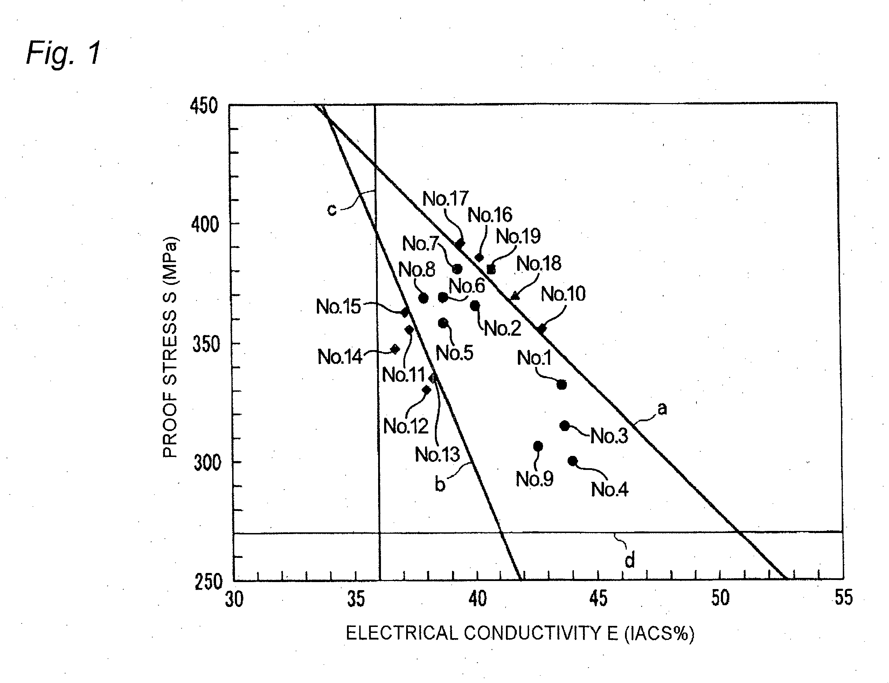

Fig. 1 is a graph showing a relationship among yield strength, electrical conductivity, and corrosion resistance.

MODE FOR CARRYING OUT THE INVENTION

Hereinafter, the aluminum alloy material of the present invention for a high-pressure hydrogen gas container and the method of the present invention for producing the same will be described with reference to specific embodiments. Hereinafter, "aluminum alloy" is also referred to as "Al alloy."

According to the present invention, the Al alloy material for a high-pressure hydrogen gas container is a product suitable for use in applications including the main body of a high-pressure hydrogen gas storage container, a peripheral part of a high-pressure hydrogen gas storage container, such as a mouthpiece part, and a gas pipe as an accessary to a high-pressure hydrogen gas storage container. In particular, a peripheral part of a high-pressure hydrogen gas storage container, such as a mouthpiece part is a principal use.

The Al alloy material of the present invention for a high-pressure hydrogen gas container includes an Al alloy including 0.6 to 1.5 mass% of Si, 0.6 to 1.6 mass% of Mg, 0.2 to 0.8 mass% of Cu, 0.05 to 0.4 mass% of Fe, Mn limited to 0.60 mass% or less, Cr limited to 0.3 mass% or less, Zr limited to 0.15 mass% or less, V limited to 0.2 mass% or less, Zn limited to 0.25 mass% or less, Ti limited to 0.1 mass% or less, with the balance consisting in Al and inevitable impurities, wherein the total content of Mn, Cr, Zr, and V is 0.05 mass% or more.

Basically, the composition of the alloy according to the present invention has a relatively low Cu content and relatively high Si and Mg contents to impart corrosion resistance while maintaining high strength. This feature provides thermal age-hardening effect and improves both strength and corrosion resistance. Each element used to form the Al alloy according to the present invention and its content will be described below.

(Si: 0.6 to 1.5 mass%)

Si partially forms a solid solution with Mg in the Al alloy matrix to solid-solution-strengthen the Al alloy. Si also produces an age-hardening effect by forming aging-induced precipitates or the like, which contribute to the strength improvement in the thermal aging treatment at a relatively high temperature. Si is therefore an essential element to form an Al alloy having high tensile strength and high yield strength, which are mechanical properties necessary for high-pressure hydrogen gas storage containers. The presence of Si also allows the formation of dispersed particles containing a Si component during the homogenizing heat treatment, so that the product can have fine crystal grains.

The Si content is from 0.6 to 1.5 mass%, preferably from 0.6 to 1.3 mass%. When the Si content falls within the range, a large amount of dispersed particles can be formed during the homogenizing heat treatment, so that fine crystal grains can be formed. If the Si content is less than 0.6 mass%, the solid-solution strengthening or the age-hardening effect will be insufficient. As a result, it will be impossible to obtain an Al alloy with high strength and high yield strength. If the Si content is less than 0.6 mass%, the number of dispersed particles will be small during the homogenizing heat treatment, so that coarse crystal grains will form to lower the mechanical properties and the hydrogen embrittlement resistance. On the other hand, if the Si content is more than 1.5 mass%, coarse crystallized precipitates will form during melting and casting, and the number of such precipitates will increase, so that the product will be more likely to break from them as starting points. If the Si content is more than 1.5 mass%, workability such as rolling, extruding, or forging workability will decrease, and workability in the process of shaping a rolled sheet, an extruded member, or a forged member into the product will also decrease.

To have improved corrosion resistance, a Cu-containing Al alloy such as that according to the present invention must contain Si. It has been found that when the Si content falls within the above range, Cu-containing thermal aging-induced precipitates can be increased, so that the strength of the product can be increased, and the amount of Cu solid solution in the matrix phase can be decreased, so that corrosion resistance such as grain boundary corrosion resistance or SCC resistance can be improved.

(Mg: 0.6 to 1.6 mass%)

Like Si, Mg also strengthens the Al alloy by forming a solid solution, and its effect is particularly high. Mg also produces an age-hardening effect by forming aging-induced precipitates or the like, which contribute to the strength improvement in the thermal aging treatment. Mg is therefore an essential element to form an Al alloy having high tensile strength and high yield strength, which are mechanical properties necessary for high-pressure hydrogen gas storage containers.

The Mg content is from 0.6 to 1.6 mass%, preferably from 0.7 to 1.6 mass%. If the Mg content is less than 0.6 mass%, the solid-solution strengthening or the age-hardening effect will be insufficient. As a result, it will be impossible to obtain an Al alloy with high tensile strength and high yield strength. On the other hand, if the Mg content is more than 1.6 mass%, coarse crystallized precipitates will form during melting and casting, and the product will be more likely to break from them as starting points. If the Mg content is more than 1.6 mass%, workability such as rolling, extruding, or forging workability will decrease, and workability in the process of shaping a rolled sheet, an extruded member, or a forged member into the product will also decrease.

(Cu: 0.2 to 0.8 mass%)

Cu is an element that contributes together with Mg and Si to the improvement of the strength and yield strength of the Al alloy. Cu is also a useful element for the improvement of the hydrogen embrittlement resistance.

The Cu content is from 0.2 to 0.8 mass%. If the Cu content is less than 0.2 mass%, its effect will be insufficient, so that it will be impossible to obtain an Al alloy having high tensile strength and high yield strength, which are mechanical properties necessary for high-pressure hydrogen gas storage containers. If the Cu content is less than 0.2 mass%, the amount of Cu capable of coupling with hydrogen will decrease, so that hydrogen embrittlement resistance will also decrease. In addition, the amount of Cu-containing high-temperature precipitates will also decrease, so that it will be difficult to obtain high corrosion resistance.

On the other hand, if the Cu content is more than 0.8 mass%, coarse crystallized precipitates will form, and the number of such precipitates will increase, so that breakage will be more likely to occur from them as starting points. The crystallized precipitates are also considered to be places from which hydrogen can intrude into the Al alloy. Therefore, if the Cu content is more than 0.8 mass%, hydrogen embrittlement resistance will decrease. In addition, the electrical potential inside the grains will increase, which will decrease corrosion resistance such as grain boundary corrosion resistance or SCC resistance. Therefore, the Cu content is set to 0.2 to 0.8 mass% in order to obtain high corrosion resistance and high hydrogen embrittlement resistance as well as high tensile strength and high yield strength.

(Fe: 0.05 to 0.4 mass%)

Fe is an element useful for forming dispersed particles together with Si. The dispersed particles are considered to trap hydrogen, suppress the accumulation of hydrogen at grain boundaries, and increase hydrogen embrittlement resistance.

The Fe content is from 0.05 to 0.4 mass%, preferably from 0.15 to 0.3 mass%. If the Fe content is less than 0.05 mass%, the number of Fe-containing dispersed particles will decrease, and coarse crystal grains will form, so that breakage and corrosion will be more likely to occur at grain boundaries and mechanical properties, hydrogen embrittlement resistance, and corrosion resistance will tend to decrease. In addition, the size and number of crystallized precipitates will decrease, and coarse crystal grains will form, so that mechanical properties, hydrogen embrittlement resistance, and corrosion resistance will also tend to decrease. On the other hand, if the Fe content is more than 0.4 mass%, coarse crystallized precipitates will form, so that breakage will be more likely to occur from them as starting points. The number and size of crystallized precipitates will also increase, so that hydrogen embrittlement resistance will decrease.

(Mn: 0.6 mass% or less, Cr: 0.3 mass% or less, Zr: 0.15 mass% or less, V: 0.2 mass% or less)

Like Fe, Mn, Cr, Zr, and V form dispersed particles together with Si during the homogenizing heat treatment. The dispersed particles function as hydrogen-trapping sites to improve hydrogen embrittlement resistance. The dispersed particles are also effective in suppressing recrystallization and making crystal grains fine. In particular, Mn partially forms a solid solution in the aluminum alloy matrix to cause a high degree of solid solution strengthening.

If any of the elements Mn, Cr, Zr, and V decreases so that the total content of them is too low, dispersed particles will decrease, and coarse crystal grains will form, so that mechanical properties and corrosion resistance will tend to decrease. Hydrogen embrittlement resistance will also tend to decrease. Therefore, the total content of Mn, Cr, Zr, and V is set to 0.05 mass% or more. On the other hand, if the content of any one of these elements is too high, coarse crystallized precipitates will form, so that breakage will be more likely to occur from them as starting points. In addition, workability such as rolling, extruding, or forging workability will decrease. Therefore, an upper limit is set for the content of each of Mn, Cr, Zr, and V, and specifically, the Mn, Cr, Zr, and V contents are limited to 0.6 mass% or less, 0.3 mass% or less, 0.15 mass% or less, and 0.2 mass% or less, respectively.

(Zn: 0.25 mass% or less)

If the Zn content is more than 0.25 mass%, the grain boundary corrosion sensitivity will increase, so that the corrosion resistance will decrease. Therefore, the Zn content is limited to 0.25 mass% or less.

(Ti: 0.1 mass% or less)

Ti acts together with B, which is contained in the master alloy for adding Ti, to make ingot crystal grains fine. However, if the Ti content is more than 0.1 mass%, a coarse intermetallic compound will form to reduce the strength and the ductility. In addition, workability such as rolling, extruding, or forging workability will significantly decrease. Therefore, the Ti content is limited to 0.1 mass% or less.

(Inevitable impurities)

Inevitable impurities may include Sn, Ni, C, In, Na, Ca, Bi, Sr, and other elements. Any of these elements is allowed to be present at a level that does not affect the features of the present invention. More specifically, the acceptable content of each of these inevitable impurity elements is 0.01 mass% or less, and the acceptable total content of these elements is 0.1 mass% or less.

The aluminum alloy described above is used to form the aluminum alloy material for a high-pressure hydrogen gas container. Hereinafter, the properties required of the aluminum alloy material will be described.

(Relationship among yield strength, electrical conductivity, and corrosion resistance)

In the present invention, the aluminum alloy material for a high-pressure hydrogen gas container needs to satisfy formulae (1) and (2) below with respect to its yield strength S (MPa) and its electrical conductivity E (IACS%):

$$S \leq -10.46 \times E + 801 \quad (1)$$

$$S \geq -25 \times E + 1296 \quad (2).$$

Fig. 1 is a graph showing the relationship among the yield strength S (MPa), the electrical conductivity E (IACS%), and the corrosion resistance. Different Al alloy materials having the above composition and produced under different conditions are plotted in Fig. 1.

As the aging of Al alloys proceeds to T6 (peak aging) or T7 (overaging), their electrical conductivity increases, but their yield strength decreases. In general, the corrosion resistance is attributable to precipitates in Al alloys or the state of the matrix phase and increases with increasing electrical conductivity. When the yield strength (Y-axis) and electrical conductivity (X-axis) of Al alloys of the same composition produced under different conditions are plotted, the resulting curve has a negative slope, in which as the electrical conductivity increases, the yield strength decreases. Al alloys of different compositions also show the same tendency. Therefore, when the yield strength and the electrical conductivity are plotted in the same manner using different 6000 series alloys of different compositions, a group of negatively-sloped curves can be obtained.

On the other hand, when the electrical conductivity is constant, Al alloys with higher yield strength will have an aged condition closer to the peak-aged condition and thus have lower corrosion resistance. When the yield strength is constant, Al alloys with lower electrical conductivity will have a peak-aged condition or an underaged condition and thus have lower corrosion resistance.

As described above, the yield strength and the corrosion resistance can be controlled by controlling the state of precipitates in Al alloys. Unfortunately, the state of precipitates significantly varies with the composition of alloys and the heat treatment conditions. Even if Al alloys have a specific composition suitable for the application according to the present invention, they can have an undesired level of corrosion resistance depending on the state of precipitates. In the present invention, therefore, for a group of curves of the electrical conductivity and yield strength of Al alloys with different compositions, a region is defined by formulae (1) and (2) to make it possible to identify Al alloys with both high yield strength and high corrosion resistance.

The production of alloys with a specific composition suitable for the application according to the present invention requires suitable temperature conditions depending on the compositional variations. Unfortunately, when the product is heated, a temperature distribution necessarily occurs in the furnace. Therefore, even if the heat treatment is performed under general temperature and time conditions, not all parts of each product are always heat-treated under the same conditions. Only when the electrical conductivity and the yield strength are measured as described above, the precipitation state of the inside of the product can be exactly known, and the strength and corrosion resistance of the product can be identified.

In Fig. 1, each of the symbols "●" indicates an Al alloy with both high grain boundary corrosion resistance and high SCC resistance. Each of the symbols "♦" indicates an Al alloy with high grain boundary corrosion resistance but low SCC resistance. The of the symbols "A" indicates an Al alloy with high SCC resistance but low grain boundary corrosion resistance. The symbol "■" indicates an Al alloy with both low grain boundary corrosion resistance and low SCC resistance.

In Fig. 1, straight line "a" indicates a borderline defined by formula (1) ($S = -10.46 \times E + 801$). Straight line "b" indicates a borderline defined by formula (2) ($S = -25 \times E + 1296$).

The region defined by formula (1) is on and below straight line "a", and the region defined by formula (2) is on and above straight line "b". The region where the two regions defined by formulae (1) and (2) overlap each other satisfies the formulae (1) and (2). In this region, the Al alloys indicated by the symbols "●" satisfy both formulae (1) and (2) and are according to the present invention. The Al alloys indicated by the symbols "●" all have both high grain boundary corrosion resistance and high SCC resistance.

To obtain Al alloys in the region satisfying formulae (1) and (2), it is necessary not only to limit the composition of Al alloys within the specified composition range but to produce the Al alloys under specific conditions particularly using specific refining conditions as described below. In other words, when the requirements for both the Al alloy composition and the production conditions are satisfied, an Al alloy material with high corrosion resistance with both hydrogen embrittlement resistance and high strength, which corresponds to the region satisfying formulae (1) and (2) in Fig. 1, can be obtained.

(Electrical conductivity)

In the present invention, the electrical conductivity is expressed as a percentage of the International Annealed Copper Standard (IACS%). As mentioned above, the electrical conductivity correlates with the corrosion resistance. In view of the relationship between the corrosion resistance and the electrical conductivity, the electrical conductivity needs to be 36 IACS% or more in the present invention. In Fig. 1, straight line c represents an electrical conductivity of 36 IACS%. According to JIS C 2525, the electrical conductivity can be determined by measuring the electric resistance by DC four-terminal method using an electrical resistance measuring device TER-2000RH manufactured by ULVAC-RIKO, Inc. The electrical conductivity can also be measured by the method described in JP 2012-21205 A or other publications.

(Yield strength, tensile strength, and elongation)

In the present invention, the Al alloy material needs to have an yield strength of 270 MPa or more so that it can be practically used to form a high-pressure hydrogen gas container. As used therein, the term "yield strength" means 0.2% offset yield strength. In Fig. 1, straight line d represents a yield strength of 270 MPa. In addition, the Al alloy material preferably has a tensile strength of 300 MPa or more, more preferably 330 MPa or more. The Al alloy material preferably has an elongation of 5% or more, more preferably 8% or more. The measurement for the tensile test can be performed according to JIS Z 2201 and JIS Z 2241.

(Production method)

Next, the method of the present invention for producing an aluminum alloy material for a high-pressure hydrogen gas container will be described. The method of the present invention for producing an aluminum alloy material for a high-pressure hydrogen gas container includes, in order, a melting-casting step including casting an aluminum alloy having the above composition to form an ingot; a homogenizing heat treatment step including heat-treating the ingot at 475 to 575°C; a hot working step including performing hot working at 275 to 575°C at a working ratio of 50% or more; a tempering treatment step including performing a solution treatment and performing a quenching treatment at a cooling rate of 1°C/second or more; and a thermal aging treatment step including performing a heat treatment at 160 to 240°C for 1 to 48 hours.

In particular, a significant feature of the production method of the present invention is that a thermal aging treatment is performed at a relatively high temperature, so that Cu-containing thermal aging-induced precipitates can be actively formed.

Hereinafter, conditions for each step will be described. It will be understood that the method of the present invention for producing an aluminum alloy material for a high-pressure hydrogen gas container may further include steps other than those described below. Steps and conditions other than those described below may be according to conventional techniques.

(Melting-casting step)

The melting-casting step includes casting an Al alloy melt of the above composition to form an ingot. In the melting-casting step, an Al alloy melt whose composition is controlled within the above composition range is cast by an appropriately selected conventional melting-casting method such as continuous casting (e.g., hot top casting) or semi-continuous casting (DC casting).

(Homogenizing heat treatment step)

The homogenizing heat treatment step includes subjecting the cast Al alloy ingot to a homogenizing heat treatment (hereinafter also referred to as "soaking") to eliminate segregation within the crystal grains in the ingot structure, homogenize the microstructure, and make crystallized precipitates fine. The ingot needs to be subjected to soaking in the relatively high temperature region of 475 to 575°C.

If the soaking temperature is less than 475°C, crystallized precipitates may fail to be made fine so that coarse crystallized precipitates may increase. This may increase the risk that too many crystallized precipitates capable of serving as starting points for breakage will form to reduce hydrogen embrittlement resistance, toughness, and fatigue characteristics.

On the other hand, if the soaking temperature is more than 575°C, coarse dispersed particles will form so that the density will tend to decrease. This may reduce the number of hydrogen-trapping sites and the hydrogen embrittlement resistance. The formation of coarse dispersed particles and the reduction in density allow recrystallization to occur easily and also cause the formation of coarse crystal grains, so that the strength will tend to decrease. This also tends to cause burning of the ingot.

The soaking is preferably performed for a time period of 1 hour or more so that the solute concentration can be homogenized and fine crystallized precipitates can be formed. If the soaking time is less than 1 hour, the solute concentration can be insufficiently homogenized, and the formation of fine crystallized precipitates may fail. The heat treatment time is preferably 24 hours or less in view of productivity.

After the soaking, the billet (ingot) is preferably forced to be cooled rapidly with a fan or the like so that the cooling rate can be increased. If the cooling rate is low, for example, in a case where the billet (ingot) is allowed to cool, $Mg_2Si$ may form around crystallized precipitates during the cooling process, and it may hardly regenerate a solid solution even in the later solution treatment. As a guide, the cooling rate is preferably 80°C/hr or more until the temperature reaches 300°C or lower, including room temperature.

(Hot working step)

The hot working step includes performing hot working of hot rolling or hot forging. In the hot working step, one or any combination of hot rolling and hot forging may be performed. Specifically, after the Al alloy ingot of the above composition is produced from a melt and then subjected to the homogenizing heat treatment, the ingot may be hot-rolled into a sheet with a desired thickness. As described below, if necessary, the hot rolling may be followed by cold rolling, or the hot rolling may be followed by cold rolling and then annealing, a solution treatment, and quenching. Alternatively, after the ingot is subjected to the homogenizing heat treatment, hot forging may be performed so that an extruded or forged member with desired thickness and shape can be obtained. As described below, the forging may be followed by cold working, or the extrusion or forging may be followed by annealing, a solution treatment, and quenching.

The hot working is performed at a temperature in the range of 275 to 575°C taking into account the composition of the components of the Al alloy and the size of the ingot. If the hot working temperature is less than 275°C, cracking or other damage may occur during the working. If the hot working temperature is more than 575°C, local melting may occur, which may cause surface blistering or cracking during the working and may also cause the product to break.

When the hot working is followed by cutting, shaping at a low working ratio, a solution treatment, quenching, and a thermal aging treatment in the manufacturing process, the resulting product has the microstructure formed after the hot working. In this case, the microstructure after the hot working should be as fine as possible, and for this purpose, forging or extrusion as the hot working should preferably be performed at a temperature as high as possible.

The hot working ratio should be selected from the range of 50% or more taking into account the composition of the components of the Al alloy, the size of the ingot, and the desired thickness of the Al alloy material (product). If the working ratio is too low, crystallized precipitates will not be finely crushed, and coarse crystallized precipitates will remain, which will make it impossible to obtain fine crystallized precipitates.

(Hot rolling)

In the case of hot rolling, the ingot after the homogenizing heat treatment is cooled to the hot rolling temperature or temporarily cooled to room temperature and then heated again to the hot rolling temperature, and then hot-rolled to form a hot-rolled sheet with a desired thickness. If necessary, the sheet is further cold-rolled to form a cold-rolled sheet with a desired thickness. The hot- or cold-rolled sheet is then subjected to the tempering treatment. The hot rolling temperature is appropriately selected from the range of 275 to 575°C.

If necessary, annealing may be performed between the hot rolling and the cold rolling or between the passes of the cold rolling process. After the rolling or after optional annealing following the rolling, the sheet is worked into a product shape such as a container and then subjected to the tempering treatment. Cutting or the like may also be performed after the working into a product shape or after the tempering treatment. In the case of a container, part of the thermal aging treatment in the refining process may be performed as a heat treatment during resin cure after winding.

(Hot forging)

In the case of hot forging, the ingot after the homogenizing heat treatment is heated again and hot-forged at a temperature in the range of 275 to 575°C to form a hot-forged member with desired thickness and shape, which is then subjected to the tempering treatment. If necessary, the hot-forged member is further hot-forged, warm-forged, or cold-forged to form a forged member with a desired thickness, which is then subjected to the tempering treatment. To increase the strength (yield strength after the refining), it is effective to form a fiber structure by setting the forging temperature high. For this purpose, the forging temperature is preferably 400°C or more.

The sheet member, the forged member, or the extruded member may be worked into the product by cold, worm, or hot pressing, drawing, spinning, cutting, bending, tube expanding, or the like.

If necessary, annealing may be performed between the passes of the hot, warm, or cold forging process. After the forging or after optional annealing following the forging, the forged material may be subjected to the tempering treatment and then finished into a final product shape by cutting or the like. Alternatively, before the tempering treatment, cutting may be performed to form a final product shape.

(Tempering treatment step)

The tempering treatment step includes subjecting the Al alloy material to a solution treatment and a quenching treatment (rapid cooling treatment) as tempering treatments after the hot working step. Taking into account the composition of the components of the Al alloy, the solution treatment is preferably performed under conditions where a temperature of 510 to 570°C is held for a certain period of time so that aging-induced precipitates capable of contributing to the strength improvement can be sufficiently formed in the grains by the following artificial age-hardening treatment at high temperature. After the solution treatment, the product is immediately subjected to a quenching treatment (rapid cooling treatment) at an average cooling rate of 1°C/second or more (thickness center part) (from 400°C to 290°C). If the cooling rate is low in the quenching treatment after the solution treatment, Si or MgSi compounds will tend to precipitate in the grains or on the grain boundary to reduce the strength, formability, and corrosion resistance of the product.

Any of a batch furnace, a continuous furnace, and a molten salt bath furnace may be used as a heat treatment furnace for the solution treatment and the quenching treatment. After the solution treatment, any of water immersion, water spraying, mist spraying, air spraying, and standing to cool in air may be used in the quenching treatment.

(Thermal aging treatment step)

The thermal aging treatment step includes performing a thermal aging treatment for improving mechanical properties such as strength and corrosion resistance after the solution treatment and the quenching treatment. The thermal aging treatment needs to perform a heat treatment at 160 to 240°C for 1 to 48 hours after the solution treatment and the quenching treatment.

If the thermal aging treatment temperature is less than 160°C, the treatment will require a long time, which is not practical. In addition, it will be difficult to form Cu-containing thermal aging-induced precipitates, so that it will be difficult to improve corrosion resistance. If the thermal aging treatment temperature is more than 240°C, the treatment time will be so short that it will be difficult to stably produce products with the same characteristics. In order to produce high-performance products, the thermal aging treatment temperature is preferably from 160 to 240°C, more preferably from 170 to 220°C.

If the thermal aging treatment time is less than 1 hour, the amount of precipitates formed by thermal aging will be small so that it will be difficult to obtain high yield strength or high corrosion resistance. A thermal aging treatment time of more than 48 hours is not practical for production. In order to produce high-performance products, the thermal aging treatment time is preferably 1 hour or more, more preferably 3 hours or more.

The thermal aging treatment is preferably performed immediately after the solution treatment and the quenching treatment. For example, according the temper designation system, the thermal aging treatment corresponds to the T6 or T7 temper treatment performed under the heat treatment conditions provided in JIS H 0001. Any of a batch furnace, a continuous furnace, an oil bath, a hot water bath, and other apparatuses may be used in the thermal aging treatment.

As mentioned above, of course, the above tempering treatments may be selected and performed before the hot-rolled sheet, or the hot-forged member is formed into a high-pressure gas container-forming member in advance. Alternatively, the hot-rolled sheet, or the hot-forged member may be formed into a high-pressure gas container member or its peripheral member without performing the tempering treatments, and then the tempering treatments may be selected and performed depending on the properties required of each member. Alternatively, the refining process may be performed in parts, for example, in such a way that the solution treatment and the quenching treatment are performed before the high-pressure gas container member or its peripheral member is formed, and the thermal aging treatment is performed after the member is formed.

The Al alloy material of the present invention obtained through the process including each step described above has high hydrogen embrittlement resistance, high strength, and corrosion resistance and is suitable for use in high-pressure hydrogen gas containers.

EXAMPLES

Hereinafter, the present invention will be more specifically described with reference to examples. It will be understood that the examples shown below are not intended to limit the present.

First, each ingot was cast from each Al alloy melt of each composition shown in Table 1 by book-mold casting using a copper mold. A sample with a diameter of 65 mm and a height of 100 mm was prepared from each ingot by cutting and facing. The sample was subjected to a homogenizing heat treatment at 560°C for 4 hours and then temporarily cooled to room temperature. Subsequently, the sample was started being subjected to hot forging at 500°C and then hot-forged at a crosshead speed of 60 mm/minute until the height was reduced from 100 mm to 20 mm. In this process, the working ratio was 80%. Subsequently, the forged sample was subjected to a solution treatment at 555°C for 3 hours in an air furnace and then immediately quenched by cooling it at a rate of about 15°C/second in water at 40°C. Subsequently, the sample was subjected to the thermal aging treatment under the conditions shown in Table 1.

[Specimens]

After the refining, the prepared forged member had a diameter of 180 mm and a thickness of 20 mm. Test pieces for tensile test, test pieces for tensile test for evaluation of hydrogen embrittlement resistance, test pieces for evaluation of grain boundary corrosion sensitivity, and test pieces (C-ring) for SCC evaluation were sampled from the forged member, then measured for properties, and evaluated. Table 2 shows the results of the evaluations. The properties were evaluated, respectively, under the conditions shown below.

[Alloy composition]

The alloy composition was measured with an emission spectrometer OES-1014 manufactured by SHIMADZU CORPORATION. A sample for component analysis was obtained from the Al melt and then solidified. The end face of the sample was made flat by cutting arid then subjected to the measurement. Concerning the alloy composition shown in Table 1, "0.00" means that the component content is less than 0.01%.

[Tensile test]

Each test piece was taken from the thickness center part of the specimen in such a way that its longitudinal direction was perpendicular to the fiber flow direction (test piece: entire length 100 mm, thickness 3 mm, parallel part: width 6.25 mm x length 32 mm, GL 25 mm). According to JIS Z 2201, the test piece was subjected to a tensile test at a crosshead speed of 5 mm/minute at room temperature in the air until rupture. The number N of the measured pieces was 3, and the average tensile strength, the average yield strength, and the average elongation were obtained, respectively. The test piece with a tensile strength of 300 MPa or more, the test piece with a yield strength of 275 MPa or more, or the test piece with an elongation of 5% or more was evaluated as being good, respectively.

[Electrical conductivity]

With respect to both sides of the test piece, five thickness center parts were subjected to measurement using a commercially available eddy current conductivity meter, and the average of the measurements was determined as the electrical conductivity (IACS%). The test piece with an IACS value of 36% or more was evaluated as being good. According to JIS C 2525, the electrical conductivity was determined by measuring the electric resistance by DC four-terminal method using an electrical resistance measuring device TER-2000RH manufactured by ULVAC-RIKO, Inc. The electrical conductivity was also measured by the method described in JP 2012-21205 A or other publications.

[Hydrogen embrittlement resistance test]

Each test piece was taken from the thickness center part of the specimen in such a way that its longitudinal direction was perpendicular to the fiber flow direction (test piece: entire length 100 mm, thickness 1 mm, parallel part: width 5 mm x length 12 mm, GL 12 mm). In each of two types of atmospheres, each test piece was subjected to a tensile test at a strain rate of $6.7 \times 10^{-7}$ $s^{-1}$ until rupture. The number N of the measured pieces was at least 2. The rate of elongation decrease was calculated from the formula: $[(\delta 1 - \delta 2)/\delta 1]$, wherein $\delta 1$ is the elongation determined in a dry atmosphere at 5%RH or less, and $\delta 2$ is the elongation determined in a highly moist atmosphere at 90%RH or more. The rate of elongation decrease is an index of hydrogen embrittlement resistance. The test piece with a rate of elongation decrease of 0.2 or less was evaluated as having high hydrogen embrittlement resistance, which is expressed by the symbol "○". The test piece with a rate of elongation decrease of more than 0.2 was evaluated as having low hydrogen embrittlement resistance, which is expressed by the symbol " $\times$ ".

[Grain boundary corrosion test]

Each test piece was taken from the thickness center part of the specimen in such a way that its longitudinal direction was parallel to the fiber flow direction (test piece: thickness 5 mm x width 20 mm x length 30 mm; one 20-mm-wide, 30-mm-long surface is the thickness center surface). A grain boundary corrosion test (immersion time 6 hours) was performed on the test piece by the method described in Annex 9 "Interpretation of Technical Standards for Compressed Natural Gas Vehicle Fuel System Containers." After the test was completed, the cross-section (5-mm-thick, 20-mm-wide surface) of the test piece was polished, and the grain boundary depth in the thickness direction from the test piece surface (thickness center part) was measured. The measured maximum depth ($\mu$m) was determined as the grain boundary corrosion depth. The test piece with a grain boundary corrosion depth of 200 $\mu$m or less was evaluated as having high grain boundary corrosion resistance, which is expressed by the symbol "○". The test piece with a grain boundary corrosion depth of more than 200 $\mu$m was evaluated as having low grain boundary corrosion resistance, which is expressed by the symbol "×".

[SCC test]

Each C-ring-shaped test piece (outer diameter 19 mm, thickness 1.52 mm, width 19 mm, jig hole diameter 6 mm) was taken from the specimen in such a way that the center of the ring coincided with the thickness center and the widthwise direction of the C-ring was perpendicular to the fiber flow direction. An alternate immersion SCC test (in which 10 minute immersion in a 3.5% sodium chloride solution and 50 minute drying (1 cycle) were alternately performed) was performed on the test piece by the method described in Annex 9 "Interpretation of Technical Standards for Compressed Natural Gas Vehicle Fuel System Containers." In the test, a tensile stress equal to 90% of the yield strength (LT direction) was applied to the peripheral side of the C-ring. The test piece with a cracking life of 30 days or more (720 cycles or more) was evaluated as having high SCC resistance, which is expressed by the symbol "○". The test piece with a cracking life of less than 30 days (less than 720 cycles) was evaluated as having low SCC resistance, which is expressed by the symbol "×".

Table 1

| Test piece No. | Alloy composition (balance: Al, inevitable impurities) (mass%) | | | | | | | | | | Thermal aging temperature | Thermal aging time | Note |
|---|---|---|---|---|---|---|---|---|---|---|---|---|---|
| | Si | Mg | Cu | Fe | Mn | Cr | Zr | V | Zn | Ti | (°C) | (hr) | |
| Test piece 1 | 1.10 | 0.89 | 0.69 | 0.19 | 0.60 | 0.02 | 0.00 | 0.00 | 0.00 | 0.03 | 190 | 9 | Example 1 |
| Test piece 2 | 1.10 | 1.40 | 0.50 | 0.20 | 0.40 | 0.02 | 0.07 | 0.00 | 0.00 | 0.02 | 190 | 9 | Example 2 |
| Test piece 3 | 0.61 | 0.96 | 0.26 | 0.21 | 0.00 | 0.15 | 0.00 | 0.00 | 0.00 | 0.03 | 180 | 9 | Example 3 |
| Test piece 4 | 0.61 | 0.96 | 0.26 | 0.21 | 0.00 | 0.15 | 0.00 | 0.00 | 0.00 | 0.03 | 190 | 9 | Example 4 |
| Test piece 5 | 0.91 | 1.50 | 0.52 | 0.19 | 0.00 | 0.20 | 0.00 | 0.10 | 0.00 | 0.02 | 180 | 9 | Example 5 |
| Test piece 6 | 1.08 | 1.52 | 0.51 | 0.24 | 0.00 | 0.18 | 0.00 | 0.10 | 0.00 | 0.03 | 180 | 9 | Example 6 |
| Test piece 7 | 1.25 | 1.49 | 0.52 | 0.23 | 0.00 | 0.18 | 0.00 | 0.10 | 0.00 | 0.03 | 180 | 9 | Example 7 |
| Test piece 8 | 1.05 | 1.52 | 0.51 | 0.26 | 0.03 | 0.19 | 0.00 | 0.09 | 0.00 | 0.02 | 180 | 9 | Example 8 |
| Test piece 9 | 0.61 | 1.10 | 0.25 | 0.20 | 0.00 | 0.19 | 0.00 | 0.00 | 0.00 | 0.02 | 180 | 9 | Example 9 |
| Test piece 10 | 1.10 | 0.89 | 0.69 | 0.19 | 0.60 | 0.02 | 0.00 | 0.00 | 0.00 | 0.03 | 180 | 9 | Comparative Example 1 |
| Test piece 11 | 0.91 | 1.50 | 0.75 | 0.19 | 0.00 | 0.20 | 0.00 | 0.10 | 0.00 | 0.02 | 180 | 9 | Comparative Example 2 |
| Test piece 12 | 0.67 | 1.40 | 0.51 | 0.21 | 0.00 | 0.20 | 0.00 | 0.10 | 0.00 | 0.02 | -180 | 9 | Comparative Example 3 |
| Test piece 13 | 0.66 | 1.30 | 0.51 | 0.21 | 0.00 | 0.20 | 0.00 | 0.10 | 0.00 | 0.02 | 180 | 9 | Comparative Example 4 |
| Test piece 14 | 0.87 | 1.48 | 0.52 | 0.24 | 0.00 | 0.18 | 0.00 | 0.10 | 0.00 | 0.03 | 180 | 9 | Comparative Example 5 |
| Test piece 15 | 1.05 | 1.50 | 0.51 | 0.27 | 0.03 | 0.28 | 0.00 | 0.10 | 0.00 | 0.02 | 180 | 9 | Comparative Example 6 |
| Test piece 16 | 1.07 | 1.50 | 0.70 | 0.25 | 0.00 | 0.18 | 0.00 | 0.10 | 0.00 | 0.02 | 190 | 5 | Comparative Example 7 |
| Test piece 17 | 1.10 | 1.51 | 0.83 | 0.26 | 0.00 | 0.18 | 0.00 | 0.09 | 0.00 | 0.02 | 190 | 5 | Comparative Example 8 |
| Test piece 18 | 1.40 | 1.20 | 0.89 | 0.20 | 0.77 | 0.02 | 0.00 | 0.00 | 0.00 | 0.02 | 190 | 9 | Comparative Example 9 |
| Test piece 19 | 1.40 | 1.20 | 0.89 | 0.20 | 0.77 | 0.02 | 0.00 | 0.00 | 0.00 | 0.02 | 180 | 9 | Comparative Example 10 |

Table 2

| Test piece No. | Electrical conductivity | Relationship between electrical conductivity and yield strength | | Tensile strength | Yield strength | Elongation | Hydrogen embrittlement resistance | Grain boundary corrosion resistance | SCC resistance | Note |
|---|---|---|---|---|---|---|---|---|---|---|
| | (IACS %) | Formula (1) | Formula (2) | (MPa) | (MPa) | (%) | | | | |
| Test piece 1 | 43.6 | ○ | ○ | 359 | 332 | 8.8 | ○ | ○ | ○ | Example 1 |
| Test piece 2 | 40.0 | ○ | ○ | 401 | 365 | 17.0 | ○ | ○ | ○ | Example 2 |
| Test piece 3 | 43.7 | ○ | ○ | 346 | 314 | 17.5 | ○ | ○ | ○ | Example 3 |
| Test piece 4 | 44.0 | ○ | ○ | 319 | 300 | 8.5 | ○ | ○ | ○ | Example 4 |
| Test piece 5 | 38.7 | ○ | ○ | 402 | 358 | 18.2 | ○ | ○ | ○ | Example 5 |
| Test piece 6 | 38.7 | ○ | ○ | 406 | 369 | 18.2 | ○ | ○ | ○ | Example 6 |
| Test piece 7 | 39.3 | ○ | ○ | 412 | 380 | 17.8 | ○ | ○ | ○ | Example 7 |
| Test piece 8 | 37.9 | ○ | ○ | 408 | 368 | 18.3 | ○ | ○ | ○ | Example 8 |
| Test piece 9 | 42.6 | ○ | ○ | 339 | 306 | 19.1 | ○ | ○ | ○ | Example 9 |

(continued)

| Test piece No. | Electrical conductivity (IACS %) | Relationship between electrical conductivity and yield strength | | Tensile strength (MPa) | Yield strength (MPa) | Elongation (%) | Hydrogen embrittlement resistance | Grain boundary corrosion resistance | SCC resistance | Note |
|---|---|---|---|---|---|---|---|---|---|---|
| | | Formula (1) | Formula (2) | | | | | | | |
| Test piece 10 | 42.8 | × | ○ | 397 | 355 | 16.2 | ○ | ○ | × | Comparative Example 1 |
| Test piece 11 | 37.3 | ○ | × | 427 | 355 | 14.6 | ○ | ○ | × | Comparative Example 2 |
| Test piece 12 | 38.0 | ○ | × | 386 | 330 | 29.6 | ○ | ○ | × | Comparative Example 3 |
| Test piece 13 | 38.4 | ○ | × | 387 | 335 | 20.2 | ○ | ○ | × | Comparative Example 4 |
| Test piece 14 | 36.7 | ○ | × | 395 | 347 | 19.5 | ○ | ○ | × | Comparative Example 5 |
| Test piece 15 | 37.3 | ○ | × | 406 | 363 | 19.0 | ○ | ○ | × | Comparative Example 6 |
| Test piece 16 | 40.2 | × | ○ | 419 | 385 | 18.2 | ○ | ○ | × | Comparative Example 7 |
| Test piece 17 | 39.4 | × | O | 433 | 391 | 19.8 | ○ | ○ | × | Comparative Example 8 |
| Test piece 18 | 41.5 | × | ○ | 400 | 368 | 9.9 | ○ | × | ○ | Comparative Example 9 |

(continued)

| Test piece No. | Electrical conductivity | Relationship between electrical conductivity and yield strength | | Tensile strength | Yield strength | Elongation | Hydrogen embrittlement resistance | Grain boundary corrosion resistance | SCC resistance | Note |
|---|---|---|---|---|---|---|---|---|---|---|
| | (IACS %) | Formula (1) | Formula (2) | (MPa) | (MPa) | (%) | | | | |
| Test piece 19 | 40.7 | × | ○ | 428 | 380 | 15.0 | ○ | × | × | Comparative Example 10 |

In the column of Table 2 labelled "Relationship between electrical conductivity and yield strength," the symbol "○" represents the case where the value falls within the range defined by formula (1) or (2), and the symbol "×" represents the case where the value does not fall within the range defined by formula (1) or (2).

Fig. 1 is a plot of the yield strength S (MPa) and electrical conductivity E (IACS%) of each of test pieces 1 to 19 shown in Tables 1 and 2.

In Fig. 1, the symbols "●" correspond to Al alloy test pieces 1 to 9, respectively, which all have both high grain boundary corrosion resistance and high SCC resistance. The symbols "♦", "▲", and "■" correspond to other Al alloy test pieces, respectively, which are inferior in one or both of grain boundary corrosion resistance and SCC resistance.

Table 2 and Fig. 1 show that test pieces 1 to 9, which satisfy the requirements for the Al alloy composition according to the present invention and also satisfy formulae (1) and (2), have high performance on mechanical properties such as strength, hydrogen embrittlement resistance, grain boundary corrosion resistance, and SCC resistance.

In contrast, test pieces 10 to 19, which satisfy the requirements for the Al alloy composition according to the present invention but do not satisfy either formula (1) or (2), are inferior in one or both of grain boundary corrosion resistance and SCC resistance.

Although having the same composition as test piece 1, test piece 10 has a low electrical conductivity and low SCC resistance because the thermal aging treatment was performed at a low temperature under unsuitable conditions for the composition according to the present invention, so that formula (1) is not satisfied.

Although having a composition partially similar to that of test piece 5, test piece 11 has low SCC resistance because the heat treatment conditions are not suitable for the composition, so that relation (2) is not satisfied. An increase in the thermal aging treatment temperature would improve the corrosion resistance, but in such a case, the yield strength would decrease so that relation (2) would be still unsatisfied.

Test pieces 12 and 13 have low SCC resistance because the content of each of Si, Mg, Cu, and Cr in them is higher than that in test piece 3 and thus the heat treatment conditions, although the same as those for test piece 3, are not suitable for the composition according to the present invention, so that relation (2) is not satisfied.

Although having a composition partially similar to that of test piece 5, test piece 14 has low SCC resistance because it has a high Fe content relative to Si content, accordingly has a high electrical conductivity relative to yield strength, and is produced using unsuitable heat treatment conditions, so that relation (2) is not satisfied.

Test piece 15 has low SCC resistance because its composition has a relatively high Cr content and the heat treatment conditions are not suitable although these are the same as those for other test pieces, so that relation (2) is not satisfied.

Test pieces 16 and 17 have low SCC resistance because their composition has relatively high Si, Mg, and Cu contents and the thermal aging treatment was performed at a high temperature for a short time, which are not suitable heat treatment conditions, so that relation (1) is not satisfied.

Test pieces 18 and 19 have low corrosion resistance because their composition has a high Mn content and the same heat treatment conditions as those for other test pieces are not suitable, so that relation (1) is not satisfied.

## Claims

1. An aluminum alloy material for a high-pressure hydrogen gas container, comprising:

   0.6 to 1.5 mass% of Si, 0.6 to 1.6 mass% of Mg;
   0.2 to 0.8 mass% of Cu, 0.05 to 0.4 mass% of Fe;
   Mn limited to 0.60 mass% or less;
   Cr limited to 0.3 mass% or less;
   Zr limited to 0.15 mass% or less;
   V limited to 0.2 mass% or less;
   Zn limited to 0.25 mass% or less; and
   Ti limited to 0.1 mass% or less, with the balance consisting in Al and inevitable impurities,
   wherein the total content of Mn, Cr, Zr, and V is 0.05 mass% or more,
   wherein the aluminum alloy material has a yield strength S (MPa) and an electrical conductivity E (IACS%) satisfying:

$$\text{formula (1): } S \leq -10.46 \times E + 801;$$

   and

$$\text{formula (2): } S \geq -25 \times E + 1296,$$

and
wherein the aluminum alloy material has a yield strength S of 270 MPa or more and an electrical conductivity of 36 IACS% or more.

**2.** A method for producing the aluminum alloy material for a high-pressure hydrogen gas container according to claim 1, the method comprising in order:

a melting-casting step comprising casting an aluminum alloy having the composition to form an ingot;
a homogenizing heat treatment step comprising heat-treating the ingot at 475 to 575°C;
a hot working step comprising performing hot working of hot rolling or hot forging at 275 to 575°C at a working ratio of 50% or more;
a tempering treatment step comprising performing a solution treatment and performing a quenching treatment at a cooling rate of 1°C/second or more; and
a thermal aging treatment step comprising performing a heat treatment at 160 to 240°C for 1 to 48 hours.

**Patentansprüche**

**1.** Aluminiumlegierungsmaterial für einen Hochdruckwasserstoffgasbehälter, umfassend

0,6 bis 1,5 Massen% von Si, 0,6 bis 1,6 Massen% von Mg;
0,2 bis 0,8 Massen% von Cu, 0,05 to 0,4 Massen% von Fe;
Mn, begrenzt auf 0,60 Massen% oder weniger;
Cr, begrenzt auf 0,3 Massen% oder weniger;
Zr, begrenzt auf 0,15 Massen% oder weniger;
V, begrenzt auf 0,2 Massen% oder weniger;
Zn, begrenzt auf 0,25 Massen% oder weniger; und
Ti, begrenzt auf 0,1 Massen% oder weniger, wobei der Rest aus Al und unvermeidbaren Verunreinigungen besteht,
wobei der Gesamtgehalt an Mn, Cr, Zr und V 0,05 Massen% oder mehr beträgt,
wobei das Aluminiumlegierungsmaterial eine Streckfestigkeit S (MPa) und eine elektrische Leitfähigkeit E (IACS%) aufweist, die:

$$\text{Formel (1): } S \leq -10{,}46 \times E + 801;$$

und

$$\text{Formel (2): } S \geq -25 \times E + 1296$$

genügen, und
wobei das Aluminiumlegierungsmaterial eine Streckfestigkeit S von 270 MPa oder mehr und eine elektrische Leitfähigkeit von 36 IACS% oder mehr aufweist.

**2.** Verfahren zur Herstellung des Aluminiumlegierungsmaterials für einen Hochdruckwasserstoffgasbehälter nach Anspruch 1, wobei das Verfahren in der Reihenfolge umfasst:

einen Schmelzgießschritt, umfassend das Gießen einer Aluminiumlegierung, aufweisend die Zusammensetzung, zum Bilden eines Gussblocks;
einen homogenisierenden Wärmebehandlungsschritt, umfassend das Wärmebehandeln des Gussblocks bei 475 bis 575°C;
einen Warmbearbeitungsschritt, umfassend das Ausführen von Warmbearbeitung durch Heißwalzen oder Heißschmieden bei 275 bis 575°C bei einem Bearbeitungsanteil von 50% oder mehr;

einen Anlassbehandlungsschritt, umfassend das Ausführen einer Lösungsbehandlung und das Ausführen einer Abschreckbehandlung bei einer Abkühlgeschwindigkeit von 1°C/Sekunde oder mehr; und
einen thermischen Alterungsbehandlungsschritt, umfassend das Ausführen einer Wärmebehandlung bei 160 bis 240°C für 1 bis 48 Stunden.

**Revendications**

1. Matériau en alliage d'aluminium pour un récipient d'hydrogène gazeux haute pression comprenant :

0,6 à 1,5 % en masse de Si, 0,6 à 1,6 % en masse de Mg ;
0,2 à 0,8 % en masse de Cu, 0,05 à 0,4 % en masse de Fe ;
Mn limité à 0,60 % en masse ou moins ;
Cr limité à 0,3 % en masse ou moins ;
Zr limité à 0,15% en masse ou moins ;
V limité à 0,2 % en masse ou moins ;
Zn limité à 0,25 % en masse ou moins ; et
Ti limité à 0,1 % en masse ou moins, avec l'équilibre constitué de Al et d'impuretés inévitables,
dans lequel la teneur totale en Mn, Cr, Zr et V est de 0,05 % en masse ou plus,
dans lequel le matériau en alliage d'aluminium a une limite d'élasticité S (MPa) et une conductivité électrique E (% IACS) satisfaisant :

$$\text{formule (1)} : S \leq -10,46 \times E + 801 ;$$

et

$$\text{formule (2)} : S \geq -25 \times E + 1296,$$

et
dans lequel le matériau en alliage d'aluminium a une limite d'élasticité S de 270 MPa ou plus et une conductivité électrique de 36 % IACS ou plus.

2. Procédé de production du matériau en alliage d'aluminium pour un récipient d'hydrogène gazeux haute pression selon la revendication 1, le procédé comprenant dans l'ordre :

une étape de fusion-coulage comprenant le coulage d'un alliage d'aluminium ayant la composition pour former un lingot ;
une étape de traitement thermique d'homogénéisation comprenant le traitement thermique du lingot à 475 à 575°C ;
une étape de travail à chaud comprenant la réalisation d'un travail à chaud de laminage à chaud ou forgeage à chaud à 275 à 575°C à un rapport de travail de 50 % ou plus ;
une étape de traitement de revenu comprenant la réalisation d'un traitement de solution et la réalisation d'un traitement de trempe à un taux de refroidissement de 1°C/seconde ou plus ; et
une étape de traitement de vieillissement thermique comprenant la réalisation d'un traitement thermique à 160 à 240°C pendant 1 à 48 heures.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001349494 A
- JP 2008002654 A
- JP 2009024225 A
- JP 2012021205 A

### Non-patent literature cited in the description

- STRUCTURE AND PROPERTIES OF ALUMINUM. The Japan Institute of Light Metals, November 1991, 483-484
- ALUMINUM ALLOYS-CONTEMPORARY RESEARCH AND APPLICATIONS. Academic Press Inc, 1989, 13